# EUROPÄISCHE PATENTSCHRIFT

(11) **EP 0 832 705 B1**
(45) Veröffentlichungstag und Bekanntmachung des Hinweises auf die Patenterteilung: **13.06.2001**
(21) Anmeldenummer: 97115792.0
(22) Anmeldetag: 11.09.1997
(51) Int. Cl.: B22D 17/00, B22D 19/04, B62D 29/00, B62D 25/02

(54) **Dünnwandiges, aus Leichtmetall bestehendes Druckgussteil als Strukturbauteil für Karosserien**
Thin-walled casting made of light metal alloy, produced by die-casting as structural element for car bodies
Moulage d'objet en alliage léger à parois minces, fabriqué par coulée sous pression comme élément de structure pour des carrosseries

(30) Priorität: 24.09.1996 DE 19639052
(43) Veröffentlichungstag der Anmeldung: 01.04.1998
(73) Patentinhaber: DaimlerChrysler AG, 70567 Stuttgart (DE)
(72) Erfinder: Söll, Guido, 73660 Urbach (DE); Fussnegger, Wolfgang, 72074 Tübingen (DE)

(56) Entgegenhaltungen:
- DE-A- 3 931 194
- DE-A- 19 523 112

## Beschreibung

Die Erfindung geht aus von gegossenen dünnwandigen Strukturbauteilen nach dem Oberbegriff von Anspruch 1 und von einem Verfahren zum gießtechnischen Herstellen dünnwandiger Strukturbauteile aus Leichtmetall für Karosserien nach dem Oberbegriff von Anspruch 8, wie beides beispielsweise aus einem Beitrag von W. Bovensmann "Neuzeitliche Druckgießmaschinen für präzise, großvolumige Druckgußteile" in der Zeitschrift Gießerei-Praxis, Nr. 7/1966, Seiten 115 bis 119 als bekannt hervorgeht.

In dieser Literaturstelle aus dem Jahre 1966 ist zwar nur das Druckgießen erwähnt und näher beschrieben, jedoch kommen neuerdings auch andere, artverwandte Gießverfahren in Betracht. Indiesem Zusammenhang sei ein Druckgießen bei evakuierter Druckgußform und das Thixocasting sowie das Thixoforming genannt. Generell handelt es sich hierbei um Urformverfahren, bei denen eine auf die Werkstückgröße abgestimmte Metallmenge in ein öffen- und schließbares Formgebungswerkzeug aus Metall eingebracht, die Form mit dem fließfähigen Leichtmetall gefüllt und unter der Einwirkung eines hohen Druckes ausgeformt und das Werkstück anschließend unter der Einwirkung dieses Druckes bis zur Handhabbarkeit des Werkstückes erstarren gelassen und aus der Form entnommen wird. Alle unter diese Definition subsumierbaren Formgebungsverfahren seien hier mit dem Begriff "Druckgießen" erfaßt. In diesem Zusammenhang kann beispielsweise auf die Sonderausgabe der Zeitschriften ATZ und MTZ aus dem Jahre 1996 zum Thema "Leichtmetalle im Automobilbau" mit Beiträgen von B. Wendiger, A. Mundl: Thixocasting - Eine Umformtechnik mit Zukunft" oder G. Springe: "Die Zukunft des Aluminiumeinsatzes im Automobilbau" verwiesen werden. Bei richtiger Wahl und Vorbehandlung des Vorproduktes mit globulitischen Gefüge und temperaturgenauer Erwärmung des einzusetzenden Zylinderblocks verhält sich der Gußwerkstoff thixotrop, läßt sich also einerseits noch vorsichtig als Festkörper handhaben, fängt aber bei Krafteinwirkung an zu fließen. Beim Thixocasting wird der teilverflüssigte Block in eine mit der Gießform über einen Zufuhrkanal verbundene Kolbenkammer eingelegt, von wo aus das thixotrope Metall - ähnlich wie beim Druckguß - mittels eines Kolbens unter hohem Druck in die Gießform eingespritzt wird. Beim Thixoforming wird hingegen der teilverflüssigte Block gleich in die noch offene Gießform eingelegt und - ähnlich wie beim Gesenkschmieden - die Gravur durch kraftvolles und rasches Schließen der Gießformhälften mit dem teilverflüssigten Metall ausgefüllt.

Diesen Verfahren sind bezüglich der Gußstückgröße natürliche Grenzen gesetzt. Zum einen wirken aufgrund der hohen erforderlichen Drücke - bis zu 1600 bar - und aufgrund der Projektionsfläche der metallbenetzten Flächen der Gießform ganz beträchtliche Kräfte auf die Gießmaschine und die Gießform ein, die aufgrund der Werkstoffelastizität des Stahls nach dem Hook'schen Gesetz zu wenn auch geringen aber dennoch unvermeidbaren Verformungen führen. Bei zunehmender Größe der Gießformen werden trotz zunehmender Aussteifung der Maschine und der Gießform diese Verformungen so groß, daß die Gießform nicht mehr sauber und gratfrei geschlossen gehalten werden kann. Eine weitere natürliche Grenze für die Gußstückgröße insbesondere von dünnwandigen Gußstücken stellt die maximal mögliche, d.h. erstarrungsfrei zurücklegbare Fließstrecke des Metalls während der Formfüllung dar. Trozt hoher Fließgeschwindigkeiten kommt es zumindest bei engen Formquerschnitten aufgrund des Kontaktes mit den Formwandungen zu einer Abkühlung, die um so größer ist, je länger die Fließwege sind. Es ist hierbei zu berücksichtigen, daß bei den hohen Fließgeschwindigkeiten des Metalles die Schmelze nicht in Form eines zusammenhängender Flüssigkeitsstrahles strömt, sondern in viele einzelne Tröpfchen zerstäubt wird, die aufgrund des hohen Formfülldruckes anschließend wieder zusammengepreßt werden. Mutet man den Schmelzepartikeln zu lange Fließwege zu, so kühlen sie zu stark ab und verlieren ihre Haftfähigkeit beim Zusammenpressen; das Gußstück wird porös und brüchig. Bei Gießverfahren der hier angesprochenen Art, insbesondere Druckgießen, Thixocasting und Thixoforming bestehen also aus den dargelegten Gründen verfahrensimmanent Grenzen hinsichtlich der Gußstückgröße, die jedoch nicht generell in Längeneinheiten angegeben werden können, weil dies auch von anderen Einflußfaktoren, insbesondere der Gußstückart, seiner Form, der Wanddicke und den Genauigkeitsanforderungen abhängt.

Aufgabe der Erfindung ist es, das gattungsgemäß zugrundegelegte Strukturbauteil bzw. das Herstellungsverfahren dahingehend zu verbessern, daß dünnwandig gegossene Strukturbauteile auch über die verfahrensimmanenten Größenbegenzung hinaus herstellbar sind.

Diese Aufgabe wird bei Zugrundelegung der jeweiligen Gattung erfindungsgemäß durch die kennzeichnenden Merkmale von Anspruch 1 (Strukturbauteil) bzw. durch die kennzeichnenden Merkmale von Anspruch 8 (Verfahren) gelöst. Danach werden die Gußstücke jeweils in mehreren, zeitversetzt nacheinander hergestellten Gußteil-Tranchen gegossen, wobei diese an ihren gegenseitigen Nahtstellen entlang einer definiert vorgegebenen formschlüssigen Kontur unmittelbar oder unter Zwischenfügung eines eingelegten Nahtstreifens mittelbar zusammengegossen werden.

Zweckmäßige Ausgestaltungen der Erfindung können den jeweiligen Unteransprüchen entnommen werden; im übrigen ist die Erfindung anhand verschiedener in der Zeichnung dargestellten Ausführungsbeispiele nachfolgend noch erläutert; dabei zeigen:
- Fig. 1: eine perspektivische Darstellung eines mehrtranchig in einem einheitlichen Druckgußwerkzeug herzustellenden Druckgußteiles am Beispiel eines Seitenwandteiles für Fahrzeugkarosserien,
- Fig. 2: eine vergrößerte Einzeldarstellung eines an den Nahtstellen zwischen zwei aneinandergrenzenden Gußteil-Tranchen einzufügenden Nahtstreifens,
- Fig. 3: eine Ansicht auf eine Aufspannplatte einer Druckgußmaschine mit strichpunktiert angedeutetem Druckgußwerkzeug und mit darin angeordnetem Rohteil für ein Seitenwandteil nach Figur 1 mit Einzeichnung der Lage der mehreren, zeitversetzt wirksam werdenden Gießzylinder und Überlaufstellen für die einzelnen Gußteil-Tranchen und
- Fig. 4 bis 6: verschiedene Nahtausführungen für ein mehrtranchig in unterschiedlichen Druckgußwerkzeugen herzustellenden Druckgußteiles.

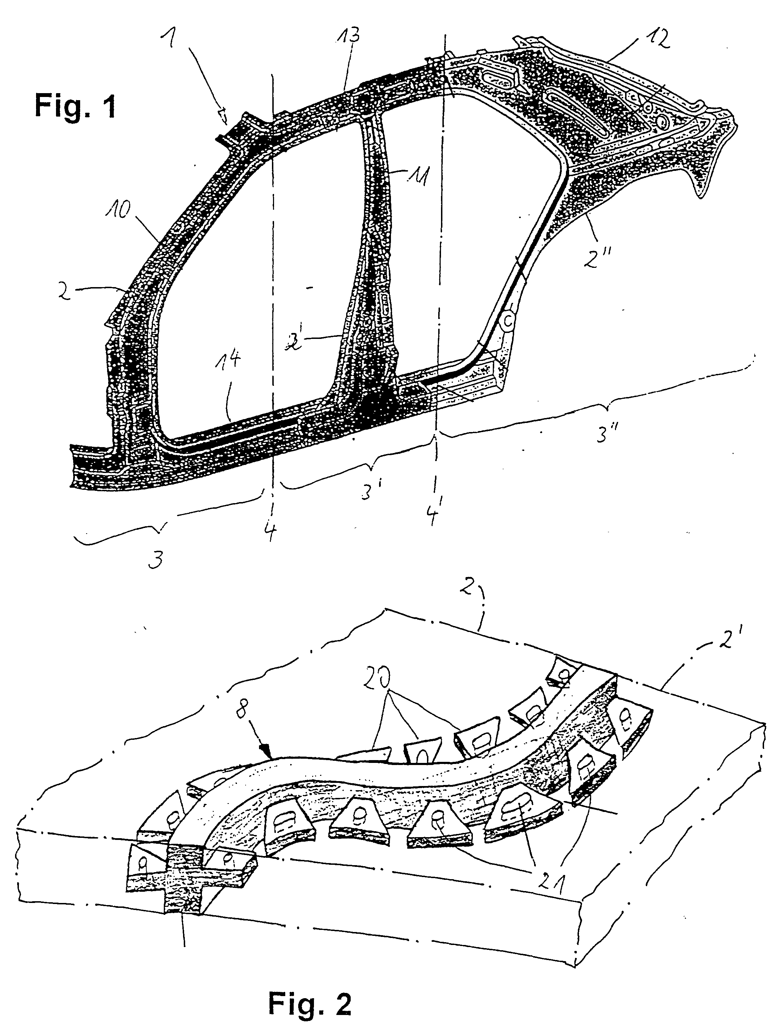

Es sei zunächst anhand der Figur 1 das in mehreren Gußteil-Tranchen herzustellende Druckgußteil, nämlich beispielsweise die Innenwandung einer zweischaligen Karosserieseitenwand, erläutert. Auf dieses innenseitige Strukturbauteil von komplizierter, aber gießtechnisch einfach herstellbarer Form wird bei der Fertigung der Rohbaukarosserie eine Außenbeplankung aus gezogenem Blech, vorzugsweise ein Leichtmetallblech aufgeschweißt, so daß eine stabile, aus Hohlprofilen gebildete Seitenwandkonstruktion entsteht, deren Außenschale der Außenhautform der Karosserie entspricht und die in ihrer Oberflächenform hohen optischen Ansprüchen gerecht wird.

Das Seitenwandteil 1 enthält die beiden Türausschnitte und die Anschlüsse bzw. Knotenelemente zu angrenzenden Trägern der Fahrzeugkarosserie. Unten im Seitenwandteil ist der Bodenschweller 14 und oben der Dachschweller 13 angeordnet. Nach vorne ist der Fahrertürausschnitt durch den Seitenholm der Windschutzscheibe und die Anschlagsäule für die Fahrertür, die sog. A-Säule 10 begrenzt. Zwischen den beiden Türen liegt der Mittelpfosten, die sog. B-Säule 11; und der hintere Türauschnitt ist nach hinten durch die Radeinfassung und die sog. C-Säule 12 begrenzt.

Wie eingangs bereits erwähnt, bereitet es große Schwierigkeiten, so große Werkstücke als ein einheitliches Druckgußteil zu gießen, weshalb das Seitenwandteil 1 erfindungsgemäß in mehreren Tranchen sukzessiv gegossen werden soll. Zu diesem Zweck ist das Seitenwandteil in insgesamt drei Bereiche 3, 3' und 3" unterteilt, in denen die einzelnen Gußteil-Tranchen 2, 2' und 2" liegen, die über Nahtlinien 4 bzw. 4' aneinandergrenzen und an diesen Nahtstellen form- und stoffschlüssig verbunden sind. Beim dargestellten Ausführungsbeispiel eines Seitenwandteiles sind diese Nahtstellen im Bereich des Dach- (13) bzw. des Bodenschwellers 14 angeordnet.

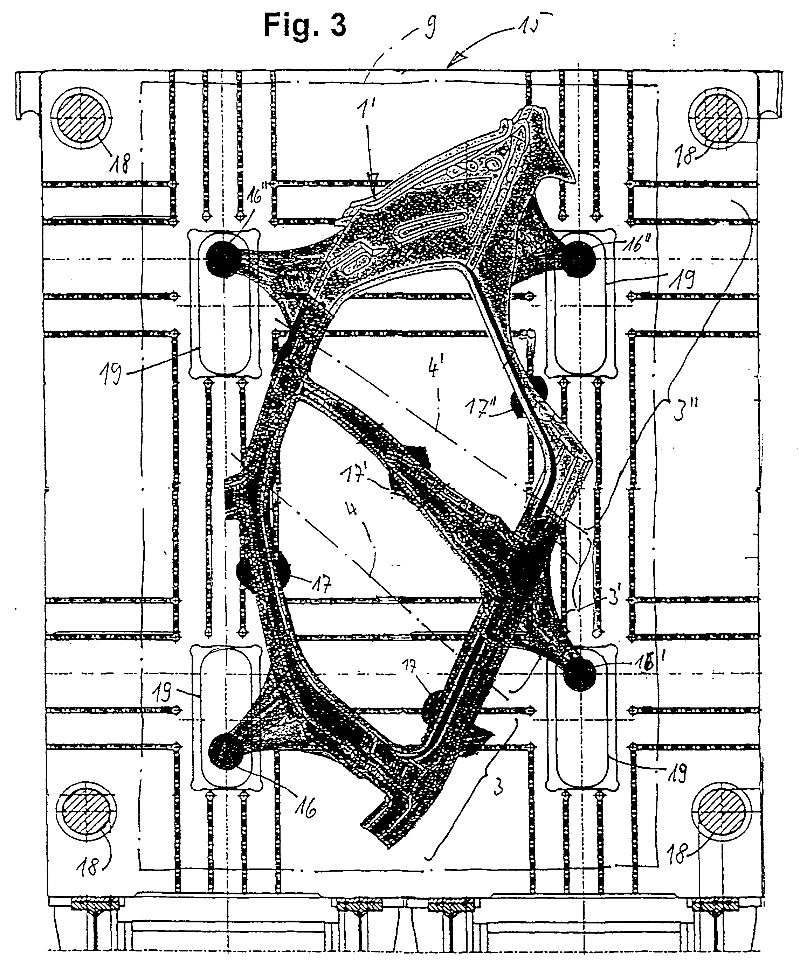

Das Gießen von Druckgußteilen in mehreren sukzessiv zu formenden Tranchen kann auf grundsätzlich zweierlei Art und Weise erfolgen, wobei jedoch im Zusammenhang mit den Figuren 1 bis 3 zunächst nur auf eine dieser Möglichkeiten eingegangen werden soll. Und zwar können danach die Gußteil-Tranchen in unterschiedlichen Abschnitten einer einheitlichen Gießform sukzessiv gegossen werden, wobei an den Abschnittsgrenzen bzw. Nahtstellen zur fluidischen Abtrennung der einzelnen Gießbereiche jeweils ein Nahtstreifen 8 nach Figur 3 lagedefiniert und lagestabil in das Druckgußwerkzeug eingelegt wird, der durch den Gießvorgang form- und stoffschlüssig mit den einzelnen Gußteil-Tranchen verbunden wird. Bei dieser Vorgehensweise werden die einzelnen Gußteil-Tranchen 2, 2' und 2" über den eingelegten Nahtstreifen 8 mittelbar miteinander verbunden. Wegen der Verwendung nur eines einheitlichen Gießwerkzeuges 9 ist die Handhabung der Werkstücke ebenso einfach, als wenn der Gießvorgang in einen einzigen Zug erfolgen würde.

Der in Figur 2 einzeln dargestellte Nahtstreifen weist zur Verbesserung seiner Anbindung an die angrenzenden Gußteil-Tranchen 2 bzw. 2' schwalbenschwanzartig geformte Vorsprünge 20 auf, die in der Wandstärke geringer sind als die Wandstärke des Gußteiles und von diesem U-förmig übergriffen werden. Der Nahtstreifen besteht aus dem gleichen oder einem sehr ähnlichen Werkstoff wie der des Gußwerkstückes selber, insbesondere was das Temperaturdehnungsverhalten, den Schmelzpunkt und die Festigkeit anlangt. Die Vorsprünge 20 selber können zusätzlich noch mit Durchbrüchen 21 versehen sein. Dadurch kommt eine vielfältige formschlüssige Verklammerung des Streifen-Werkstoffes mit dem Gußteil-Werkstoff zustande. Ein zusätzliches stoffschlüssiges Anbinden des Gußteil-Werkstoffes an den Nahtstreifen kann insbesondere dadurch begünstigt werden, wenn der Nahtstreifen auf etwa 400 bis 500°C vorgewärmt wird oder wenn er stark aufgeraut wird mit spitz aufragenden Materialaufwerfungen, die Initialisierungsstellen für ein Anschmelzen darstellen. Aufgrund der Vorwärmung oder der speziellen Aufrauhung schmilzt der Nahtstreifen durch die Wärmezufuhr seitens der einströmenden Gußteil-Schmelze oberflächlich an und geht mit ihr eine stoffschlüssige Verbindung ein.

Die Figur 3 zeigt eine Aufspannplatte 15 einer Druckgußmaschine mit darauf strichpunktiert angedeutetem Druckgußwerkzeug 9. Die Aufspannplatte ist durch Führungssäulen 18 gehalten. Entlang dieser Führungssäulen ist eine andere, das gegenüberliegende Gegenwerkzeug tragende Aufspannplatte zwischen Offen- und Schließstellung des Druckgußwerkzeuges verfahrbar. Über die Führungssäulen 18 werden auch die Schließkräfte zum Zusammenhalten der Werkzeughälften seitens der Druckzylinder der Druckgußmaschine übertragen.

Zur besseren Beherrschung der beim Druckgießen auftretenden Kräfte wird das Gußstück nicht auf der gesammten Erstreckung einheitlich gefüllt und abgeformt, sondern zeitversetzt abschnittsweise gegossen und erstarren gelassen. Zu diesem Zweck ist die erwähnte Einteilung des Gußstückes in Gußteilbereiche 3, 3' und 3" entlang von Nahtstellen 4 bzw 4' im Dach- bzw. Bodenschwellerbereich vorgesehen. An diesen Nahtstellen müssen zur fluidischen Abtrennung der einzelnen Gießräume Nahtstreifen nach Figur 2 in das Werkzeug eingelegt werden, die formschlüssig in entsprechenden Aussparungen der Gravur aufgenommen und dort lagedefiniert und lagestabil gehalten sind, so daß sie nicht unter dem hohen Druck der Schmelze ausweichen können. Auf diese Weise sind drei separate Gießräume in ein und demselben Gießwerkzeug geschaffen, die zeitlich nacheinander nach der Druckgußtechnik gefüllt werden können. So kann der komplette Werkstück-Rohling in Gußteil-Tranchen sukzessiv vollständig bei beherrschbaren Schließkräften gegossen werden.

Entsprechend der Anzahl von Gußteil-Bereichen 3, 3' und 3" sind mindestens drei, im dargestellten Beispiel sogar vier Gießzylinder 16, 16' und zweimal 16" vorgesehen, die jedoch nur zeitversetzt wirksam werden. Entsprechend der mehreren Gußteil-Bereiche sind auch mehrere Überlaufstellen 17 (zweimal), 17' und 17" am Druckgußwerkzeug vorgesehen. Zur Anpassung an örtliche Gegebenheiten und Größenverhältnisse des Werkstückes sind die Gießzylinder 16, 16' und 16" in einem Langloch parallel zur Aufspannplatte 9 verfahrbar und in eine jeweiligen Bedarfsposition justierbar und dort fixierbar.

Zur Herstellung eines Seitenwandteiles werden an den Nahtlinien die Nahtstreifen in das Druckgußwerkzeug eingelegt, das Werkzeug geschlossen und der Formhohlraum in dem ersten Gußteilbereich 3 über den Gießzylinder 16 gefüllt und insoweit das Werkstück abgeformt. Dabei verbindet sich die Schmelze auch mit der gezahnten Kontur des Nahtstreifens und geht nicht nur eine formschlüssige, sondern bei geeigneter Vorbehandlung des Nahtstreifens auch eine stoffschlüssige Verbindung ein. In dem ersten Gußteilbereich wird der Schmelzendruck bis zur Erstarrung der Schmelze aufrechterhalten. Nach Absenkung der Kolbenkraft an dem ersten Gießzylinder 16 wird ein anderer Gießteilbereich, beispielsweise der zweite Gießteilbereich 3' über den zweiten Gießzylinder 16' gefüllt und der Gießdruck bis zur Werkstückerstarrung aufrechterhalten. Schließlich wird nach Druckentlastung des zuletzt gegossenen Bereiches auch noch der letzte Gußteil-Bereich 3" über die beiden Gießzylinder 16" gefüllt und unter Druck ausgeformt und erstarren gelassen. Anschließend kann das komplette Seitenwand-Rohteil 1' aus dem DruckgußWerkzeug entnommen werden.

Gemäß einer anderen Vorgehensweise können die einzelnen Gußteil-Tranchen in unterschiedlichen Druckgußwerkzeugen gegossen werden. Dazu wird eine der Anzahl der Gußteil-Tranchen entsprechende Zahl von Druckgußwerkzeugen und Druckgußmaschinen benötigt, wobei es sich hierbei um größen- und kräftemäßig beherrschbare und im Prinzip konventionelle Werkzeug- und Maschinenbauformen handelt. In einer ersten Gießform bzw. Druckgußmaschine wird eine erste Gußteil-Tranche gegossen. Diese erste Gußteil-Tranche wird in eine zweite Gießform bzw. Druckgußmaschine eingelegt und beim Druckgießen der zweiten Gußteil-Tranche mit dieser zusammengegossen. Auf diese Weise kann eine dritte, eine vierte usw. Gußteil-Tranche angegossen werden. Bei dieser Vorgehensweise werden die Gußteil-Tranchen unmittelbar miteinander verbunden. Es ist auch möglich, zunächst die beiden dies- und jenseits einer mittleren Gußteil-Tranche 2' liegenden Gußteil-Tranchen 2 und 2" vorzufertigen und sie gemeinsam mit der mittleren Gußteil-Tranche 2', die als letzte gegossen wird, zusammenzugießen.

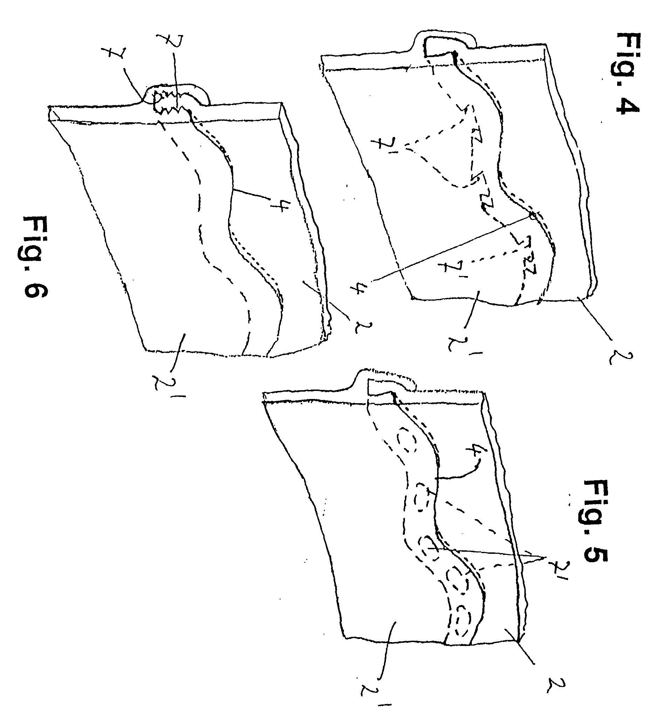

Die Ausführungsbeispiele nach den Figuren 4, 5 und 6 zeigen Möglichkeiten auf, wie bei dieser Vorgehensweise und dem unmittelbaren Aneinandergießen der einzelnen Gußteil-Tranchen ein guter Verbund zwischen ihnen erzielt werden kann. Und zwar verläuft die Nahtlinie zwischen benachbarten Gußteil-Tranchen gezahnt oder wellenförmig und der Rand der anzugießenden Gußteil-Tranche 2' umfaßt den im Querschnitt schwalbenschwanzförmig gestalteten Rand der benachbarten, zuvor gegossenen Gußteil-Tranche 2 im Querschnitt U-förmig. Außerdem sind in den U-förmig umfaßten Rand formschlüssig wirkende Konturelemente in Form von Rillen 7, Durchbrüchen 7' oder schwalbenschwanzartig sich verjüngende Randausbrüchen 7" vorgesehen.

## Patentansprüche

1. Dünnwandiges aus Leichtmetall bestehendes Druckguß-, Thixocasting- oder Thixoformingteil als Strukturbauteil insbesondere für Karosserien,
**dadurch gekennzeichnet,**
daß das Strukturbauteil (1) aus mehreren gleichartigen, sich jeweils über einen Teilbereich (3, 3', 3") des Strukturbauteiles (1) erstreckenden und aneinander anschließenden Gußteil-Tranchen (2, 2', 2") besteht, die an ihren gegenseitigen Nahtstellen (4, 4') unmittelbar oder mittelbar unter Zwischenfügung eines eingelegten Nahtstreifens (8) form- und stoffschlüssig verbunden sind.

2. Gegossenes Strukturbauteil nach Anspruch 1,
**dadurch gekennzeichnet,**
daß die Nahtlinie (4, 4') zwischen benachbarten Gußteil-Tranchen (2, 2', 2") gezahnt oder wellenförmig verläuft.

3. Gegossenes Strukturbauteil nach Anspruch 1,
**dadurch gekennzeichnet,**
daß der Rand der einen, anzugießenden Gußteil-Tranche (2', 2") den Rand der benachbarten, zuvor gegossenen Gußteil-Tranche (2, 2') im Querschnitt U-förmig umfaßt.

4. Gegossenes Strukturbauteil nach Anspruch 3,
**dadurch gekennzeichnet,**
daß der U-förmig umfaßte Rand der Gußteil-Tranche (2, 2') formschlüssig wirkende Konturelemente in Form von Rillen (7), Durchbrüchen (7') oder schwalbenschwanzartig sich verjüngenden Randausbrüchen (7") enthält.

5. Gegossenes Strukturbauteil nach Anspruch 1,
**dadurch gekennzeichnet,**
daß im Fall einer mittelbaren Verbindung zweier benachbarter Gußteil-Tranchen (2, 2', 2") über den zwischengefügten Nahtstreifen (8) dieser aus einem gleichen Werkstoff wie die Gußteil-Tranchen (2, 2', 2") besteht.

6. Gegossenes Strukturbauteil nach Anspruch 1,
**dadurch gekennzeichnet,**
daß es als Karosserie-Seitenwandteil (1) von Pkw-Karosserien umfassend die A-, B- und die C-Säule (10, 11, 12) ausgebildet ist.

7. Gegossenes Strukturbauteil nach Anspruch 6,
**dadurch gekennzeichnet,**
daß das Karosserie-Seitenwandteil (1) in drei Gußteil-Tranchen (2, 2', 2") unterteilt ist, wobei die Nahtstellen (4, 4') jeweils in den Dachschweller- (13) und in den Bodenschwellerbereich (14) gelegt sind.

8. Verfahren zum gießtechnischen Herstellen dünnwandiger Strukturbauteile aus Leichtmetall für Karosserien, bei dem eine auf die Gußstückgröße abgestimmte Metallmenge zentral in eine Gießform aus Metall eingebracht, das fließfähige Leichtmetall innerhalb der Gießform unter der Einwirkung eines hohen Druckes ausgeformt und das Gußstück anschließend unter der Einwirkung dieses Druckes bis zur Handhabbarkeit des Werkstückes erstarren gelassen und aus der Gießform entnommen wird,
**dadurch gekennzeichnet,**
daß die Gußstücke jeweils in mehreren Gußteil-Tranchen (2, 2', 2") gegossen werden, wobei die Gußstück-Tranchen (2, 2', 2") eines Gußstückes (1) zeitversetzt nacheinander nach dem gleichen Verfahren und aus einem zumindest annähernd gleichen Leichtmetall jedoch in unterschiedlichen Gießformen oder unterschiedlichen Abschnitten einer Gießform (9) gegossen werden und an ihren gegenseitigen Nahtstellen (4, 4') entlang einer definiert vorgegebenen formschlüssigen Kontur unmittelbar oder unter Zwischenfügung eines eingelegten Nahtstreifens (8) mittelbar zusammengegossen werden.

9. Verfahren nach Anspruch 8,
**dadurch gekennzeichnet,**
daß im Fall eines mittelbaren Zusammengießens der Gußteil-Tranchen (2, 2', 2") eines Gußstückes (1) unter Zwischenfügung eines lagedefiniert an der Nahtstelle (4, 4') einlegbaren Nahtstreifens (8) die Gußteil-Tranchen (2, 2', 2") sukzessiv in unterschiedlichen Abschnitten einer zusammenhängenden Gießform gegossen werden.

10. Verfahren nach Anspruch 8,
**dadurch gekennzeichnet,**
daß eine in einer ersten Gießform gegossene erste Gußteil-Tranche (2, 2') in eine zweite Gießform eingelegt und in dieser dem Gießen der zweiten Gußteil-Tranche (2', 2") dienenden zweiten Gießform mit der zweiten Gußteil-Tranche (2', 2") zusammengegossen wird.

11. Verfahren nach Anspruch 8,
**dadurch gekennzeichnet,**
daß Karosserie-Seitenwandteile (1) von Pkw-Karosserien umfassend die A-, B- und die C-Säule (10, 11, 12) gegossen werden.

12. Verfahren nach Anspruch 11,
**dadurch gekennzeichnet,**
daß die Karosserie-Seitenwandteile (1) in drei Gußteil-Tranchen (2, 2', 2") gegossen werden, wobei die Nahtstelle (4, 4') in den Dachschweller- und Bodenschwellerbereich (13, 14) gelegt ist.

## Claims

1. Thin-walled die cast, thixo-casting or thixo-forming part, made of light metal, as a structural part of automobile bodies in particular,
characterized in that
the structural part (1) comprises several similar cast sections (2, 2', 2") which adjoin each other and which extend over the partial area (3, 3', 3") of the structural part (1), the said casting sections being bonded together, directly or indirectly through use of an inserted seaming strip (8), in a flush connection, at the joins (4, 4').

2. Cast structural part in accordance with claim 1,
characterized in that
the join (4, 4') runs in a toothed or waved line between adjacent cast sections (2, 2', 2").

3. Cast structural part in accordance with claim 1,
characterized in that
the rim of one casting section (2', 2") envelopes, in a U-shaped cross-section, the rim of the previously cast casting section (2, 2').

4. Cast structural part in accordance with claim 1,
characterized in that
the U-shaped enclosed rim of the casting section (2, 2') comprises formlocking, shaping elements in the form of grooves (7), openings (7') or dove-tailed tapering openings (7") in the rim.

5. Cast structural part in accordance with claim 1,
characterized in that
in the case of indirect connection of two adjacent casting sections (2, 2', 2") by means of the inserted seaming strip (8), the latter is made of the same material as the casting sections (2, 2', 2").

6. Cast structural part in accordance with claim 1,
characterized in that
it is developed as an automobile body lateral section (1) enveloping the A-, B- and C-columns (10, 11, 12).

7. Cast structural part in accordance with claim 6,
characterized in that
the automobile body lateral section (1) is divided up into three casting sections (2, 2', 2"), whereby the seams (4, 4') are in each case laid in the roof beam area (13) and in the floor strut area (14).

8. Process for cast production of thin-walled, structural parts made of light metal, for automobile bodies, in which a quantity of metal, which is determined by the size of the part to be cast, is introduced centrally into a mould, in which the fluid, light metal is given form in the mould under the influence of a high pressure, and in which the cast part is then left to harden, under pressure, to the point where the work-piece can be handled and is removed from the mould,
characterized in that
the cast parts are in each case cast in several casting sections (2, 2', 2"), whereby the casting sections (2, 2', 2") of a cast part (1) are cast one after the other in accordance with a time-shift, in accordance with the same process, and are cast in at least almost the same light metal, though in different moulds or in different sections of a mould (9), and are directly cast together, along a specific, set, flush edge on their opposing seam faces, or are indirectly cast together, along a specific, set, flush outline with use of an inserted seam-strip (8).

9. Process in accordance with claim 8,
characterized in that
in the case where the cast sections (2, 2', 2") of a cast part (1) are cast together with the use of a sealing-strip (8) laid on the join (4, 4'), inserted in a set position, the casting sections (2, 2', 2") are cast in different sections of a continuous mould.

10. Process in accordance with claim 8,
characterized in that
a first casting section (2, 2'), cast in a first mould, is laid in a second mould and the second casting section (2', 2") is poured into the second mould, casting it to this first casting section.

11. Process in accordance with claim 8,
characterized in that
the automobile body lateral sections (1) are cast such that they envelop the A-, Band C- columns (10, 11, 12).

12. Process in accordance with claim 11,
characterized in that
the automobile body lateral sections (1) are cast in three casting sections (2, 2', 2"), whereby the joins (4, 4') are placed in the roof beam and floor strut areas (13, 14).

## Revendications

1. Pièce moulée sous pression, de thixocasting ou de thixoforming, réalisée en métal léger, faisant office de composant structurel, en particulier pour des carrosseries, caractérisé en ce que,
le composant structurel (1) est constitué d'une pluralité de tranches de pièce moulée (2, 2', 2") de même type, s'étendant chacune sur une zone partielle (3, 3', 3") du composant structurel (1) et se raccordant les unes les autres, les tranches étant reliées, par une liaison à ajustement de forme et par la matière, a leur point de jonction (4, 4') mutuel, directement ou indirectement, avec interposition d'une bande de jonction (8) insérée.

2. Composant structurel moulé selon la revendication 1, caractérisé en ce que la ligne de jonction (4, 4') s'étend en forme de denture ou d'ondulation entre des tranches de pièces moulées (2, 2', 2") voisines.

3. Composant structurel moulé selon la revendication 1, caractérisé en ce que le bord d'une première tranche de pièce moulée (2', 2") à mouler entoure, en ayant une section transversale en forme de U, le bord de la tranche de pièce moulée (2, 2') voisine, moulée préalablement.

4. Composant structurel moulé selon la revendication 3, caractérisé en ce que le bord, entouré en forme de U, de la tranche de pièce moulée (2, 2') contient des éléments de contour agissant pour produire une liaison à ajustement de forme, réalisés sous la forme de cannelures (7) de traversée (7') ou de découpage de bordure (7") allant en s'effilant, du genre d'une queue d'aronde.

5. Composant structurel moulé selon la revendication 1, caractérisé en ce que, dans le cas d'une liaison indirecte entre deux tranches de pièces moulées (2, 2', 2") voisines, par l'intermédiaire de la bande de jonction (8) interposée, celle-ci est constituée du même matériau que celui des tranches de pièces moulées (2, 2', 2").

6. Composant structurel moulé selon la revendication 1, caractérisé en ce qu'il est réalisé à titre de partie de paroi latérale de carrosserie (1), appartenant à des carrosseries de voitures particulières, comprenant les colonnes A, B, et C (10, 11, 12).

7. Composant structurel moulé selon la revendication 6, caractérisé en ce que la partie de paroi latérale de carrosserie (1) est subdivisée en trois tranches de pièces moulées (2, 2', 2"), les points de jonction (4, 4') étant chaque fois placé dans la zone de linteau et dans la zone de seuil de plancher (14).

8. Procédé de fabrication par moulage de composants structurelles à paroi mince en métal léger pour des carrosseries, dans lequel une quantité de métal, adaptée à la taille de la pièce moulée, est introduite centralement dans un moule de coulée en métal, le métal léger fluide est façonné à l'intérieur du moule de coulée sous l'effet d'une pression élevée et la pièce moulée est ensuite laissée se solidifier sous l'effet de cette pression, jusqu'à ce que la pièce façonnée soit manipulable, et est prélevée du moule de coulée, caractérisé en ce que
les pièces moulées sont chacune coulées en donnant une pluralité de tranches de pièces moulées (2, 2', 2"), les tranches de pièces moulées (2, 2', 2") d'une pièce moulée (1) étant coulées de façon temporellement décalée, les unes après les autres, selon le même procédé et, à partir d'un métal allégé au moins à peu près identique, cependant dans des moules de coulée différents ou des tronçons différents d'un moule de coulée (9), et étant assemblés indirectement, par coulée, à leurs points de jonction (4, 4') mutuels, le long d'un contour de liaison à ajustement de forme prédéterminée de façon définie, avec interposition directe ou indirecte d'une bande de jonction (8) insérée.

9. Procédé selon la revendication 8, caractérisé en ce que, dans le cas d'un assemblage indirect, par moulage, des tranches de pièces moulées (2, 2', 2") d'une pièce moulée (1), avec interposition d'une bande de jonction (8) insérable en une position définie au point de jonction (4, 4'), les tranches de pièces moulées (2, 2', 2") sont coulées successivement dans des tronçons différents d'un moule de coulée, constitué de plusieurs éléments rattachés.

10. Procédé selon la revendication 8, caractérisé en ce qu'une première tranche de pièce moulée (2, 2'), moulée dans un premier moule de coulée, est insérée dans un deuxième moule de coulée et est assemblée, par moulage, à la deuxième tranche de pièce moulée (2, 2'), dans ce deuxième moule de coulée servant au moulage de la deuxième tranche de pièce moulée (2, 2'),

11. Procédé selon la revendication 8, caractérisé en ce que sont moulées des parties de paroi latérale de carrosserie (1) appartenant à des voitures particulières comprenant les colonnes A, B et C (10, 11, 12).

12. Procédé selon la revendication 11, caractérisé en ce que les parties de paroi latérale de carrosserie (1) sont moulées en trois tranches de pièces moulées (2, 2', 2"), le point de jonction (4, 4') étant placé dans la zone de linteau de toit et la zone de seuil de plancher (13, 14).
